(19) Europäisches Patentamt
European Patent Office
Office européen des brevets

(11) EP 2 416 899 B1

(12) EUROPEAN PATENT SPECIFICATION

(45) Date of publication and mention
of the grant of the patent:
**22.08.2018 Bulletin 2018/34**

(51) Int Cl.:
***B09B 3/00*** (2006.01)

(21) Application number: **10715168.0**

(22) Date of filing: **06.04.2010**

(86) International application number:
**PCT/EP2010/054522**

(87) International publication number:
**WO 2010/115884 (14.10.2010 Gazette 2010/41)**

(54) **METHOD AND PRODUCT FOR TREATMENT OF PERCOLATE FROM WASTE**

METHODE UND ERZEUGNIS ZUR BEHANDLUNG VON ABFALLSICKERWASSER

MÉTHODE ET PRODUIT DE TRAITEMENT DE COULAGE DE DÉCHETS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**ME RS**

(30) Priority: **06.04.2009 IT TO20090264**

(43) Date of publication of application:
**15.02.2012 Bulletin 2012/07**

(73) Proprietor: **AS & Partners S.R.L.
20123 Milano (IT)**

(72) Inventor: **SANNINO, Alessandro
I-73100 Lecce (IT)**

(74) Representative: **Conversano, Gabriele
Laforgia, Bruni & Partners srl
Via Michele Garruba, 3
70122 Bari (IT)**

(56) References cited:
**EP-A- 0 195 550       EP-A- 0 277 018
EP-A- 0 839 539       DD-A1- 212 969
US-A- 5 269 634       US-B1- 6 964 745**

## Description

### Technical field

The present invention relates to a new and advantageous method for the treatment of waste, particularly waste comprising a liquid phase, known as "waste percolate".

Percolate is a liquid that forms either by infiltration of water within the solid mass of waste or by decomposition of the waste itself or by progressive compaction of the waste. The formation of percolate in a landfill is a considerable technical and economic problem. Percolate is in fact a liquid waste characterized by a more or less high content of pollutants which must be eliminated.

### Background art

The procedure commonly used to treat percolate in current landfills provides for four steps: 1) collection of the percolate; 2) storage in tanks; 3) pumping in tank trucks and transport to purification plants; 4) filtering and discharge into the sea or in rivers of the treated material.

This procedure entails considerable problems, which are mostly linked to the risks in the management of a highly noxious product and the costs associated with the process. In particular, the step of storing the material has safety problems for the operators and for inhabited areas in the vicinity of storage sites, due to the risks of inhaling percolate or in any case of prolonged exposure to the toxic and malodorous gaseous emissions generated by said product, the high flammability of the liquid, and the risks of contamination of the soil and of the water tables as a consequence of infiltrations and leaks of product during storage, transfer and transport.

Furthermore, the transport step has very high costs, linked to the transport of toxic liquids.

The purification step, moreover, has problems of high environmental impact, linked to control of stability over time of the filters, to the efficiency of the purification process and to the dumping into the sea or watercourses of toxic residues.

EP 0839539 A1 discloses the preamble of claims 1 and 11 and shows a gelifying compound for use by medical staff to solidify blood inside waste bags so as to prevent accidental leaks and contamination. Urine or blood spills, accidentally spilled on the hospital floors, may also be recuperated and disposed, so as not to compromise the hygienic integrity of the hospital. The gelifying compound comprises a superabsorbent polymer, particularly sodium polyacrylate; a chemical disinfectant, particularly potassium peroxymonosulfate; an organic deodorant, particularly from herbal extracts; and a chelating agent, particularly malic acid.

### Disclosure of the invention

The aim of the present invention is to provide a new method for treating waste comprising a liquid phase, also known as "waste percolate", which does not require the prior separation of the percolate from the solid mass of waste and therefore allows to overcome the technical drawbacks and economic disadvantages of the conventional methods described earlier.

This aim is achieved by means of a method according to claim 1, suitable to absorb and retain waste percolate, achieving thereby the gelling of the percolate.

The dependent claims illustrate further details of the provision of the method according to the invention and are an integral part of the present description.

In the present description, the term "hydrogel" is used to reference a crosslinked polymer that is adapted to assume a swelled state when it is placed in contact with an aqueous liquid medium that represents the solvent, said crosslinked polymer being able to absorb the solvent and retain it within the molecular meshes. Therefore, the hydrogel can be considered as a particular type of polymeric solution, which has the cohesive properties of a solid and the diffusive transport properties of a liquid.

The process of forming a gel starting from a more diluted solution is generally termed "sol-gel" transformation. Some examples of this transformation are the formation of agarose gels, methylcellulose and nitrocellulose starting from aqueous solutions. If a crosslinked polymeric system is placed in contact with a solvent, considerable swelling of the structure is observed. The interactions that occur between the solvent and the polymeric segments are the typical ones of the solvation process. Complete solubilization, however, is prevented by the presence of molecular nodes that ensure the structural integrity of the system. The consequent gelatinous phase can be likened to a polymeric solution in the solid state. The initial dry material is generally termed "xerogel" and the corresponding process is termed "xerogel-gel transformation".

Gels are characterized by kinetic and equilibrium factors. The factors that most influence the quality of the gel state are temperature, osmotic pressure, solvent composition and degree of swelling. Gels are also characterized by density and by the type of crosslinking bonds and is therefore by their strength. There are in fact chemical gels, in which the bonds between polymeric chain segments are of the covalent type, and physical gels, in which crosslinking occurs with secondary bonds, such as van der Waals interactions, hydrophobic interactions or ionic interactions.

Hydrogels are a particular subclass of gels, in which the dispersed fluid phase is constituted by water.

Polyelectrolyte gels can be anionic or cationic in nature, depending on whether they have carboxylic groups or tertiary amine groups on the polymeric structure. Polyelectrolyte gels are particularly adapted for applications requiring a behavior that is sensitive to external conditions, such as temperature, pH, composition and ionic force of the solution with which the gel is in chemical equilibrium. In practice it is not possible to make a clear distinction between hydrogels and polyelectrolyte gels, since the latter preserve their capacity, moreover enhanced by the presence of the fixed charges, to absorb considerable quantities of the solvent water. Indeed, reference is made very often to hydrogels that contain ionizable groups.

This phenomenon, which appears as a volume transition, has been studied by several authors, who have pointed out that it can also be induced by the other factors, other than pH, which generally influence the extent of the swelling of a polyelectrolyte gel.

In the present description, the term "polyelectrolyte gel" or "polyelectrolyte hydrogel" is used to reference a "chemical" gel or hydrogel, in which stabilization of the polymeric network is achieved by means of the presence of covalent bonds. This stabilization is achieved by crosslinking of polymeric chains, as in the case of gels based on cellulose derivatives, or by polymerization of monomers, as often occurs in the case of polyacrylates.

Superabsorbent polymers are a class of polymers characterized by high absorption capacity with respect to water or aqueous solutions. By way of non-limiting example, 1 gram of superabsorbent polymer is capable of absorbing over 1 liter of water without releasing it under high compression.

Polymers with these characteristics are used in products that are already commercially available. Mention is made, by way of example, of the absorbent core of diapers and of absorbent products for personal hygiene. These are predominantly acrylic-based products, in which the acrylamide is first polymerized and then crosslinked so as to obtain stable covalent bonds among the polymeric chains, which prevent complete dissolution in water or aqueous solutions. In addition to acrylic-based superabsorbent polymers, superabsorbent polymers based on biodegradable natural polymers are known and marketed.

The superabsorbent polymers of greatest commercial interest are polymers which are crosslinked starting from partially neutralized acrylic acid. Formally, these are terpolymers of acrylic acid, sodium acrylate and a crosslinking agent. In some cases, these are terpolymers grafted to starch or polyvinyl alcohol, which act as substrate. The swelling capacity and elasticity of these polymers depend on the structural characteristics of the polymeric network and mainly on crosslinking density. Polyacrylate synthesis techniques are all aimed at a suitable balancing of the properties of the superabsorbent, by controlling the structure of the polymeric network.

## Ways of carrying out the invention

With reference to the most widespread methods, these superabsorbents are prepared by polymerization, initiated by free radicals, of acrylic acid and salts thereof, with a crosslinking agent, in an aqueous solution (according to the method known as "polymerization in bulk solution") or in a suspension of drops of aqueous solution in hydrocarbons (according to the method known as "polymerization in suspension"). These two methods have some common aspects. The concentrations of monomer and crosslinking agent, the type of initiator and its concentration, the relative reactivities of the monomers, the polymerization kinetics and the reaction temperatures are in fact key factors in both processes.

The concentration of monomer in the reaction solution influences the properties of the resulting polymer, the reaction kinetics and the economy of the process. High concentrations of monomer cause an increase in the stiffness of the polymeric gel as polymerization progresses.

Polymerization reactions are initiated by free radicals in an aqueous phase, using thermally decomposable initiators, redox initiators or combinations thereof. The combinations of these initiators are used when the reaction occurs over a wide temperature range. In this case, one wishes to keep the reaction rate constant despite temperature variations.

Chain transfer agents can be used to control the properties of the network by controlling the molecular mass of the polymeric structure. In general, the use of the chain transfer agents increases the swelling capacity of the polymer. Moreover, these substances can be used to minimize branching and self-crosslinking reactions, which occur during polymerization performed with high monomer concentrations.

Relatively small quantities of crosslinking agent have a fundamental role in modifying the properties of superabsorbents. The crosslinking agents typically used in this type of material are esters of di- and triacrylate. Besides modifying the mechanical and swelling properties, crosslinking agents influence the quantity of soluble polymer that forms during polymerization. The tendency of the crosslinking agent to be consumed earlier during polymerization affects its reactivity with acrylic acid or sodium acrylate, and the premature exhaustion of the crosslinking agent causes an increase in the soluble fraction in the final product.

The efficiency of the crosslinking agent also depends on steric hindrance and on reduced mobility on the side of the double dangling bond, on the tendency of a given crosslinking agent to favor intermolecular addition (cyclopolymerization) and on the stability of the crosslinking agent itself. As a consequence of this combination of factors, different crosslinking agents induce completely different properties in the final product.

Moreover, there are several specific methods for preparing superabsorbents. In so-called "graft" copolymerization, water soluble polymers such as starch or polyvinyl alcohol are attached ("grafted") to the superabsorbent in order to modify its properties. Some processes benefit from the increase in viscosity of the monomer solution and the grafted water-soluble substrates indeed are intended for this purpose. Historically, the first superabsorbents, known as "super slurpers", were formed by acrylonitrile grafted to starch. Special initiators can be useful to increase the anchoring efficiency of these substances to polymers that contain hydroxyl sites.

In the process of polymerization in suspension, droplets of water-monomer solution are dispersed in another phase, generally aromatic or aliphatic hydrocarbons, prior to polymerization. In general, the degree of neutralization is higher in this type of process due to the solubility of the acrylic acid in the hydrocarbon phase, which makes the reaction and handling more difficult.

The size of the hydrogel particles can be controlled by using, in suitable quantities, dispersants such as suspensions of sorbitan monostearate or sorbitan monolaurate, fatty acid esters, ethylcellulose, et cetera. The shape of the particles produced in the process in suspension can be influenced by the viscosity of the monomer phase. One can obtain particles of superabsorbent which are elongated, with a narrow size distribution, by keeping the viscosity of the aqueous phase at approximately 5000 cP and with the addition of water-soluble thickeners.

An essential step of every process for preparing superabsorbents is the gel drying step. Continuous hot air dryers, such as dryers with heat transport by conduction, by radiation or with hot air, are often used. The popularity of this drying method is due mainly to the speed of the process. However, sometimes this process does not stop the problem of elimination of unreacted residue monomers, although the water contained in the polymer is removed efficiently. Other drying methods are the ones that use so-called drum dryers and, more recently, so-called continuous screw dryers.

The materials and production processes described above refer to polymers that have an essentially acrylic base and are not biodegradable. In view of the increased sensitivity of authorities and public opinion to environmental protection issues, in recent years researchers have directed their attention toward the study of superabsorbents based on biodegradable polymers. One of the fundamental problems is their higher cost, which is partly due to the production process, which often is more laborious, and partly to the higher cost of some of the raw materials to be used.

For extremely hydrophilic systems, such as polyelectrolyte gels derived from natural polymers (starch, cellulose and polysaccharides in general), there is extensive literature that provides, for these superabsorbent structures, orders of magnitude of water absorption capacity, equal to 1000 expressed in grams of $H_2O$/grams of dry polymer. One of the first studies conducted on superabsorbent structures based on cellulose derivatives is the study by Lepoutre et al., who synthesized a cellulose-acrylonitrile copolymer by using wood pulp as raw material. The polyacrylonitrile-cellulose copolymer is subsequently hydrolyzed in an alkaline environment to create a polyelectrolyte structure, polyacrylic group neutralized with sodium, which represents the ionic group that belongs to the polymer. The absorbent capacity exhibited by this material is on the order of 50 g of water per gram of dry polymer.

A similar result in terms of absorbent capacity has been achieved by Vitta et al., who copolymerized by grafting on cellulose, obtained from wood pulp, directly acrylic and metacrylic groups, following this with hydrolysis to create the salts - and therefore the ionic groups - of the acids. The percentage of ionic groups grafted onto the polysaccharide structure, as well as the degree of hydrolysis of the acid groups, influences considerably the absorbent capacity of the material.

In recent years, Sannino et al. have developed a broad class of biodegradable superabsorbents based on cellulose derivatives which are described in international patent applications WO2006/070337 and WO2009/022358.

The key properties of superabsorbent polymers are the swelling capacity and the elastic modulus of the crosslinked swollen gel. These properties are both linked to the crosslinking density of the network: in general, the modulus increases and the swelling capacity decreases as the crosslinking density increases. The crosslinking density in a superabsorbent is low: it is sufficient to consider that in the materials used for absorbent products for personal hygiene it is around 0.03 moles of crosslinking agent per liter of dried polymer.

One very common measure for determining absorbent capacity used in the industry of superabsorbent polymers is capacity in centrifuge, which consists in determining the capacity to retain water or solution absorbed by a specimen of gel placed in a centrifuge within water-repellent porous bags. The specifications of the test are standard and rather similar among the various industries of the sector, which is mainly the sector of absorbent products for personal hygiene.

Some absorption tests are performed in conditions that simulate the conditions of real use of the material, and the most common are again the ones related to absorbent products for personal hygiene. This information is then correlated to the osmotic compressibility of the network, which is a value that in turn is correlated to the swelling pressure variation with respect to the variation of the concentration of polymer in the gel. In other words, osmotic compressibility can be considered a measure of how easily a given gel can desorb as a consequence of pressure applied from outside.

One parameter to which increasing attention is being paid in recent year is the absorption kinetics of the material, which is also linked to the problem of distribution of the fluid. The most porous gels generally exhibit higher swelling rates.

The absorption capacity of a superabsorbent must always be assessed in various conditions, which often limit its field of applicability. For example, acrylic-based superabsorbents cannot be used in applications in which the material is exposed to seawater, because their absorption capacity decreases considerably due to the low stability of acrylic acid in the presence of polyvalent cations. A hydrolyzed gel can in fact vary its volume as the composition of the solvent in which it is immersed varies. The charged groups anchored to the polymeric structure play an essential role in this phenomenon. Indeed, due to the so-called "Donnan effect", the contribution to the absorption of water in the polymeric matrix depends on the amount of charges anchored to the structure and on the concentration of ions dissolved in the solution in contact with the gel. In particular, if the number of charges that are fixed on the polymer increases, the tendency of water to penetrate in the matrix by osmotic effect also increases. For the same reason, if the concentration of ions dissolved in the solution increases, the amount of water that penetrates the gel decreases.

Furthermore, a crosslinked polymer with charged groups anchored to the structure absorbs a quantity of liquid that varies as a function of the pH of the solution with which it is placed in contact. As regards the breadth of the pH interval in which transition from low to high values of gel absorption capacities is observed, we note that there are various ways in which this transition can occur. As confirmed in the literature, the interval increases in extent as the length of the side chains of the polymer increases and progressively shifts to lower pH values for methyl, ethyl and propyl esters.

In view of the above description, examples of polymers of the type of superabsorbent polyelectrolytic macromolecular hydrogels adapted for use in the method according to the invention are: superabsorbents based on polyacrylamide, acrylic acid, polyethylene glycol, polyvinyl alcohol, sodium polyacrylate; derivatives of cellulose, such as carboxymethylcellulose, hydroxyethylcellulose, hydroxyproplycellulose; starch.

Among these, preference is given to those based on polyacrylamide, acrylic acid, sodium polyacrylate, cellulose derivatives.

In the method according to the invention, the polymer of the type of superabsorbent polyelectrolytic macromolecular hydrogel in the dry state is used in a mixture with a second component, which is suitable to absorb the gaseous phase produced by the waste, suppressing bad odors and noxious fumes. Substances suitable for this purpose are $\alpha$-, $\beta$- cyclodextrin and preferred embodiments refer to $\gamma$-cyclodextrins, zeolites, activated carbons, cellulose derivatives, porous ceramics. These substances are used in combination with the superabsorbent polymer, individually or in mixtures of two or more substances, depending on the suppression that one wishes to obtain.

The percentage of cyclodextrins, activated carbons and/or zeolites that are used generally vary in the interval of 0-20% by weight with respect to the weight of superabsorbent polymer, as a function of the type of suppression that one wishes to obtain. A preferred interval is comprised between 0.01 and 5%. The percentages of derivatives of cellulose and/or porous ceramics that are used generally vary in an interval of 0-60% by weight with respect to the weight of the superabsorbent polymer, in which a preferred interval is between 0.1 and 30% by weight.

Percolate absorption occurs already simply by adding to the liquid the superabsorbent polymer, optionally in a mixture with one or more of one of the above cited substances; however, better kinetics and efficiency of gelling of the liquid are achieved by adding slowly the polymer or the combination described above to the liquid mass, which is kept under slow mixing.

Once it has gelled, the percolate reduces the emission of volatile substances and bad odors by over 90% with respect to the same percolate in the liquid phase, as indicated in the experimental part that follows.

Furthermore, in this state the gel is not flammable, as noted hereafter.

This allows to reduce by over 90% the safety problems related to storage and transport of percolate.

Once it has gelled, the percolate, instead of being transported in the liquid phase to the purification plants, is for example transferred in the form of solid waste to the landfill itself or to neighboring facilities, to a burner, where it can be eliminated together with the solid waste. It is possible furthermore to conceive that the landfill itself might be fitted with its own dedicated burner connected to a turbine, which collects the exhaust gases produced by the combustion of the gel to convert the waste into energy, which is needed by the landfill itself or transferred to the grid.

In both cases, the operations for transporting the toxic liquid, for purification and dumping into waterways or into the sea are eliminated advantageously.

As an alternative to application for the treatment of percolate in landfills, the method according to the invention is furthermore used for requalification of Refuse Derived Fuel (RDF), also known as waste bales, by means of injections of treatment material in order to avoid dumping into the water table; for the formation of new waste bales, in the treatment of the subsoil of landfills, so as to prevent or reduce percolation and avoid pollution of water tables and subsoil; in systems for drying waste freshly collected in compacting trucks and in systems for collection in municipal curbside bins, in order to avoid percolation during transport; in the collection of tannery sludge with suppression of bad odors; in the collection and blocking of fumes due to environmental pollution.

Current waste bales, i.e., masses of waste compacted and stored at specific sites, are a significant problem with high environmental impact, both due to the emission of malodorous volatile substances which are harmful for human health and due to the continuous dumping of percolate that is generated during prolonged storage and is released into the environment with consequent pollution problems.

The method according to the invention lends itself both to the treatment of already-formed waste bales and to the production of new waste bales.

a) Treatment of already-formed waste bales: the polymer of the superabsorbent polyelectrolytic macromolecular hydrogel type, in combination with cyclodextrin and optionally with activated carbons, zeolites, derivatives of cellulose and/or porous ceramics, in the forms and quantities described earlier (hereinafter referenced as "the product"), is injected in various points of the waste bale, providing holes in various mutually distant points so as to ensure uniformity of distribution. The injection can be performed with the product in dry powder form conveyed by compressed air. The quantity of product to be added varies in an interval comprised between 0.2 g and 100 g of product per kilogram of waste compressed in the form of waste bale, with an optimum efficiency comprised in an interval of 2-30 g of product per kilogram of waste bale. The percentages can vary as a function of the type of waste that is stored, of the moist waste percentage and of the storage method. For example, in humid environments or environments exposed to frequent rain, the required percentages of product may be higher. The modes of absorption of the percolate by the product and the capacity to suppress the emission of malodorous and/or noxious gases, combined with the capacity to convert the liquid percolate that is generated into a gelatinous solid that is not dumped into the environment, are similar to the ones described for the preceding case related to the treatment of liquid percolate.

B) Treatment of new waste bales: this treatment provides the same result described in relation to already-formed waste bales, but differs in the method of addition of the product, which in this case can be mixed to the waste during the formation of the waste bale.

The treatment of waste bales reduces by over 90% the dumping of percolate into the environment throughout the life of the waste bale itself. Annual requalifications can be provided for storage cycles that exceed 10 years.

C) Treatment of landfill subsoil: one of the main problems of current landfills consists in protecting the subsoil against the dumping of percolate during storage thereof or of waste. The method according to the invention allows to deal with this problem. For this purpose, a porous membrane, or more commonly a porous waterproof fabric, with pores smaller than the particle size of product powders, is used. A cellulose fluff containing the product described earlier is inserted in the membrane. The percentage of product with respect to the cellulose fluff is comprised between 5 and 100% by weight, with an optimum solution in an interval comprised between 45 and 75%. The cellulose fluff has the double function of ensuring rapid absorption and distribution of any infiltrations of liquid within the entire absorbent structure. The described system, arranged below the base of the landfill by way of methods that vary depending on the structure, location and availability, has the function of retaining, without releasing it, any percolate that might have filtered through the containment systems of the landfill, thus ensuring total absence of dumping into the water table of toxic or noxious products.

D) Drying of freshly collected waste: the system for drying waste during transport can be managed by providing the waste collection vehicles with suitable product distribution systems. In particular, during collection and first milling of the waste in the vehicle, it is possible to distribute a quantity of product, in powder form, over the mass of waste being turned. The distribution can be performed, for example but without limitation, by means of an opening/closure valve, which is activated whenever the milling system is activated/deactivated, and a dosage system, which distributes the quantities of product according to the percentages already mentioned. This system has two advantages: the first one is avoidance of the phenomenon of flow of the percolate during transport of the waste, which pollutes the streets and generates bad odors, and the second one is the possibility to obtain upstream a product that has a higher percentage of dry phase, which has a higher heat value, and does not dump percolate during the storage steps that occur directly after collection.

As regards making municipal curbside bins compliant with the regulations, the same system for collection of the liquid phase described above is used, with dimensions and a geometry that are adequate to the shape of said bin, in order to avoid the flow of liquid phase in the immediate vicinity of the collection area and limit bad odors during storage.

E) Collection of tannery sludge: tannery sludge generally contains both an aqueous phase and a liquid oily phase, in addition to the solid phases that are generally present in the form of a suspension. The treatment method according to the present invention can be used to collect the aqueous liquid phase, with consequent reduction of malodorous and noxious fumes. This collection is performed by mixing the product with the entire mass to be treated, in such quantities as to allow absorption of the entire aqueous liquid mass, estimated on the basis of assessments performed in each instance with the managers of the reference tanneries.

Since the aqueous phase is the one with the lowest viscosity, gelling of this phase by using the product allows a double benefit: it increases considerably the viscosity of the product, facilitating its collection and disposal in the solid phase, and the emission of bad odors and noxious volatile substances into the atmosphere, which are mostly present in the liquid phase, is reduced considerably.

F) Collection and blocking of fumes due to environmental pollution: in all cases of environmental pollution of the soil and subsoil in which it is necessary to block fumes originating from partially or totally aqueous liquid phases, it is possible to use the product, in the compositions and percentages of the components that are similar to the ones described for the preceding cases and adapted in each instance to the specific case. This allows to limit the emission of malodorous and/or toxic fumes into the atmosphere until the step of final reclamation of the polluted area.

G) Leakage of percolate: a problem in public and private areas having waste storage facilities for containing waste or pipes for flow of waste, is the potential leakage of percolate from the storage facilities or pipes. In severe situations, the leakage may result in flooding, such as in confined areas. The leaked percolate may cause pollution and generates bad odors. In production factories, such leakage may even result in the release of toxic into the environment.

The treatment method according to the present invention can be used to collect the leaked percolate or prevent the spread of such leakages. The product may be distributed over the affected areas so that the leaked percolate may be absorbed, thereby sequestering the liquid phase percolate in a gelled state and accordingly, facilitating its collection and disposal in the solid phase. The product may be also used to contain spread of the leakage, for example in situations of continuous leakage to allow for sufficient time to remedy the leakage, or when there is flooding caused by the leakage.

The product may also be placed in areas of potential leakage as a preventative measure. Spreading the product in these areas may enable leakage of percolate to sequestered before any spread, thus, preventing pollution and generation of bad odors.

H) Waste percolate from accumulation of water: a problem may occur due to excess water accumulating in areas where the water tends to stagnate and may thus cause formation of waste in a liquid phase. The product may be also used to absorb the waste in the liquid phase, facilitating its collection and disposal in the solid phase.

The experimental part that follows is given merely by way of non-limiting example of the scope of the invention as defined in the appended claims.

<u>EXPERIMENTAL PART</u>

1. *Absorption tests*

Absorption tests were performed by mixing the product, in various combinations of superabsorbent hydrogel and cyclodextrins, with liquid percolate from various sources (i.e., landfills). The tests were conducted by using graduated beakers, a precision balance to the second decimal digit, a hood and a dosage unit.

In particular, a known quantity of product in terms of weight and composition was poured into the beaker under the hood. The percolate was added slowly to the beaker in a minimum quantity such as to allow total absorption thereof in approximately 1 minute (i.e., the beaker with the gelled percolate was overturned and the product did not flow). More percolate was added, in increasing quantities until the first phenomenon of flow of the gel along the walls of the beaker was observed. At this point one assumed to be in the presence of the first drop of percolate remaining in the liquid phase and the test was interrupted. The weight of percolate added up to this step was estimated as the maximum quantity absorbable by the product regarding the composition used. The results achieved are given in Table 1. The swelling ratio, indicated as SR, is the parameter used to measure the absorption capacity of the product and is defined as follows:

$$SR = \text{percolate weight/dry product weight}$$

The terms P1 and P2 in the table refer to two different types of percolate, taken from two different landfills. The superabsorbent gel used for this test is a commercial hydrogel based on polyacrylamide. The reference letters A, B and C designate respectively $\alpha$, $\beta$, $\gamma$ cyclodextrins. The values given for the swelling ratio SR are the average of five independent measurements.

*Table 1. Results of absorption tests*

| Product composition | | SR in P1 | SR in P2 |
|---|---|---|---|
| 1. | 0.3 g of gel | 100 | 180 |
| 2. | 0.3 g of gel+ 0.1 g of A | 82 | 151 |
| 3. | 0.3 g of gel + 0.2 g of A | 64 | 104 |
| 4. | 0.3 g of gel + 0.3 g of A | 53 | 98 |
| 5. | 0.3 g of gel + 0.1 g of B | 102 | 186 |
| 6. | 0.3 g of gel + 0.2 g of B | 86 | 154 |
| 7. | 0.3 g of gel + 0.3 g of B | 67 | 109 |
| 8. | 0.3 g of gel + 0.1 g of C | 98 | 147 |
| 9. | 0.3 g of gel + 0.2 g of C | 79 | 146 |
| 10. | 0.3 g of gel + 0.3 g of C | 50 | 102 |

It can be noted that as the quantity of cyclodextrin increases, the absorption capacity of the product decreases, since said capacity is closely correlated to the effect performed by the superabsorbent gel. The difference in absorption capacity between the two types of percolate has been attributed to a different concentration of ions present in the solution. Since the superabsorbent hydrogel being considered is a polyelectrolyte, as the ionic force of the external solution increases, its absorption capacity decreases, due to the reduction in osmotic pressure, which is correlated to the Donnan effect, which facilitates the entry of the liquid phase in the swollen gel.

It is appropriate to specify that both percolate samples considered represent standard situations that are present in current landfills in different stages of maturation.

2. *Volatile substance suppression tests*

Tests for suppression of bad odors and potentially toxic substances emitted into the atmosphere were performed by using methyl mercaptan as tracer, because this substance is characterized by:

- a significant presence in landfill percolates;
- a highly unpleasant smell;
- an extremely low solubility in water;
- a specific gravity lower than water (0.869 g/ml);
- a vapor pressure at 26.1° C equivalent to 2 $kg/cm^2$;
- a surface tension at 33°C equivalent to 22.42 $dyn/cm^2$;
- a partition coefficient higher than 0.5.

The tests were conducted by measuring the concentration of the substance in the vapor phase in the immediate vicinity of the percolate. Analysis was performed by comparing the results obtained on the liquid percolate as is and the results obtained on the percolate absorbed by the product in different percentages as listed in Table 2. In this case also, A, B and C refer respectively to $\alpha$, $\beta$, $\gamma$ cyclodextrins. The percolate used in this study is the same type as the percolate P1 used for the absorption tests. The hydrogel is the same one used for the absorption tests.

*Table 2: Composition of the samples in the vials*

Percolate as is
Percolate + 0.3 g of gel
Percolate + 0.3 g of gel + 0.1 g of A
Percolate + 0.3 g of gel + 0.2 g of A
Percolate + 0.3 g of gel + 0.3 g of A
Percolate + 0.3 g of gel + 0.1 g of B
Percolate + 0.3 g of gel + 0.2 g of B
Percolate + 0.3 g of gel + 0.3 g of B
Percolate + 0.3 g of gel + 0.1 g of C
Percolate + 0.3 g of gel + 0.2 g of C
Percolate + 0.3 g of gel + 0.3 g of C

In order to perform the test, both the liquid percolate and the percolate with the addition of the product were confined in vials, in which a probe for analysis of the gaseous phase was inserted. The measurements were made at the time t = 0, i.e., when the percolate was added to the vial, and 120 minutes after insertion of the percolate. The results are given in Table 3.

*Table 3. Results of gaseous phase suppression test*

| Chemical analysis | | | |
|---|---|---|---|
| Measurements | | Concentration (mg/l) | |
| Methyl mercaptan | | 18.9 | |
| Analysis of vials | | | |
| Sample | Time (min) | Concentration Substrate | Methyl mercaptan Head space |
| 1 | 0<br>120 | 19,3 (mg/l)<br>6.2 (mg/kgl) | /<br>11.9 (mg/l) |
| 2 | 0<br>120 | 18.7 (mg/l)<br>18.0 (mg/kgl) | /<br>0.2 (mg/l) |
| 3 | 0<br>120 | 20.8 (mg/l)<br>19.9 (mg/kgl) | /<br>0.2 (mg/l) |
| 4 | 0<br>120 | 19.4 (mg/l)<br>19.0 (mg/kgl) | /<br>0.3 (mg/l) |
| 5 | 0<br>120 | 21.2 (mg/l)<br>20.6 (mg/kgl) | /<br>0.5 (mg/l) |
| 6 | 0<br>120 | 19.7 (mg/l)<br>16.4 (mg/kgl) | /<br>2.8 (mg/l) |
| 7 | 0<br>120 | 20.0 (mg/l)<br>19.5 (mg/kgl) | /<br>0.2 (mg/l) |
| 8 | 0<br>120 | 18.6 (mg/l)<br>13.8 (mg/kgl) | /<br>4.6 (mg/l) |
| | | | |
| 9 | 0<br>120 | 19.2 (mg/l)<br>8.9 (mg/kgl) | /<br>0.4 (mg/l) |
| 10 | 0<br>120 | 21.4 (mg/l)<br>21.0 (mg/kgl) | /<br>0.3 (mg/l) |
| 11 | 0<br>120 | 19.5 (mg/l)<br>15.8 (mg/kgl) | /<br>3.8 (mg/l) |

It is noted that with respect to the percolate as is, once the product has been added one obtains an almost total suppression of methyl mercaptan, in quantities that vary as a function of the composition of the product. With respect to this type of volatile substance, the gel as is and the gel with small additions of $\alpha$ and $\beta$ cyclodextrin provide the best results. Of course, the distribution of the cyclodextrins in the product must be in each instance modulated as a function of the type and concentration of volatile substances emitted by the liquid.

**Claims**

1. A method for the treatment of percolate from waste, said method comprising the step of adding to said waste a polymer of the superabsorbent polyelectrolytic macromolecular type hydrogel in the dry state to absorb and retain percolate from waste for gelling of the percolate wherein the polymer of the superabsorbent polyelectrolytic macromolecular type hydrogel is in combination with a second component, which is suitable to absorb the gaseous phase produced by the waste, **characterized in that**, said second component being selected from the group that consists of α- cyclodextrins, β-cyclodextrins, and the amount of α- cyclodextrins or β-cyclodextrins, is variable between 0 and 20% by weight with respect to the weight of superabsorbent polymer.

2. The method according to claim 1, wherein the polymer of the superabsorbent polyelectrolytic macromolecular hydrogel type is selected from the group that consists of superabsorbents based on polyacrylamide, acrylic acid, polyethylene glycol, polyvinyl alcohol, sodium polyacrylate; cellulose derivatives; starch.

3. The method according to claim 2, wherein the polymer of the superabsorbent polyelectrolytic macromolecular type hydrogel is a superabsorbent based on polyacrylamide crosslinked with methylene-bisacrylamide.

4. The method according to any one of claims 1 to 3, wherein the treatment is performed on municipal solid waste in a landfill.

5. The method according to any one of claims 1 to 3, wherein the treatment is performed on Refuse Derived Fuel, in the form of waste bales, by compressed-air injection of the polymer of the superabsorbent polyelectrolytic macromolecular type hydrogel in the dry state, optionally in combination with a component, which is suitable to absorb the gaseous phase produced by the waste, said component being selected from the group that consists of γ-cyclodextrins, zeolites, activated carbons, cellulose derivates, porous ceramics and any combination thereof, within the Refuse Derived Fuel.

6. The method according to any one of claims 1 to 3, wherein the treatment is used to produce Refuse Derived Fuel in the form of waste bales comprising percolate in the gelled state.

7. The method according to any one of claims 1 to 3, wherein the polymer of the superabsorbent polyelectrolytic macromolecular type hydrogel is placed below the layer of waste of a landfill, so as to absorb in situ the percolate of the landfill.

8. The method according to any one of claims 1 to 3, wherein the treatment is performed on tannery sludge.

9. The method according to any one of claims 1 to 3, further comprising the step of burning the gelled percolate to produce synthesis gas for the production of energy.

10. The method according to any one of claims 1 to 3, wherein the treatment is performed on leakage of percolate from a storage facility or a pipe system.

11. A product for the treatment of percolate from waste, comprising a polymer of the superabsorbent polyelectrolytic macromolecular type hydrogel in the dry state, suitable to absorb and retain percolate from waste, and a second component, which is suitable to absorb the gaseous phase produced by the waste, **characterized in that**, said second component being selected from the group that consists of α-cyclodextrins, β- cyclodextrins, the amount of α-cyclodextrins or β-cyclodextrins being variable between 0 and 20% by weight with respect to the weight of superabsorbent polymer.

12. The product according to claim 11, wherein the polymer of the superabsorbent polyelectrolytic macromolecular hydrogel type is selected from the group that consists of superabsorbents based on polyacrylamide, acrylic acid, polyethylene glycol, polyvinyl alcohol, sodium polyacrylate; cellulose derivatives; starch.

13. The product according to claim 12, wherein the polymer of the superabsorbent polyelectrolytic macromolecular type hydrogel is a superabsorbent based on polyacrylamide crosslinked with methyl ene-bisacrylamide.

**Patentansprüche**

1. Verfahren zur Behandlung von Perkolat aus Abfällen, wobei das besagte Verfahren den Schritt des Hinzufügens eines Polymers des superabsorbierenden polyelektrolytischen makromolekularen Hydrogels im trockenen Zustand zu dem Abfall umfasst, um Perkolat aus dem Abfall zu absorbieren und zurückzuhalten, um das Perkolat zu gelieren, wobei das Polymer des superabsorbierenden polyelektrolytischen makromolekularen Hydrogels in Kombination mit einer zweiten Komponente vorhanden ist, die geeignet ist die durch die Abfälle erzeugte Gas-Phase zu absorbieren, **dadurch gekennzeichnet, dass** die besagte zweite Komponente aus der Gruppe ausgewählt ist, die aus $\alpha$-Cyclodextrine, $\beta$-Cyclodextrine besteht, und die Menge an $\alpha$-Cyclodextrinen oder $\beta$-Cyclodextrinen ist variabel zwischen 0 und 20 Gew.-%, mit Bezug auf das Gewicht des superabsorbierenden Polymers.

2. Verfahren nach Anspruch 1 , wobei das Polymer des superabsorbierenden polyelektrolytischen makromolekularen Hydrogel-Typ ausgewählt ist aus der Gruppe bestehend aus Superabsorbern auf Basis von Polyacrylamid, Acrylsäure, Polyethylenglykol, Polyvinylalkohol, Natriumpolyacrylat; Cellulosederivate; Stärke.

3. Verfahren nach Anspruch 2, wobei das Polymer des superabsorbierenden polyelektrolytischen makromolekularen Hydrogel-Typs ein Superabsorber auf der Basis von Polyacrylamid ist, das mit Methylen-bis-acrylamid vernetzt ist.

4. Verfahren nach einem der Ansprüche 1 bis 3, wobei die Behandlung an Siedlungsabfällen in einer Deponie durchgeführt wird.

5. Verfahren nach einem der Ansprüche 1 bis 3, wobei die Behandlung an abgelagertem Brennstoff in Form von Abfallballen, durch Druckluft-Injektion des Polymers des superabsorbierenden polyelektrolytischen makromolekularen Hydrogel-Typs im trockenen Zustand durchgeführt wird gegebenenfalls in Kombination mit einer Komponente, die geeignet ist, die durch den Abfall erzeugte gasförmige Phase zu absorbieren, wobei die besagte Komponente ausgewählt ist aus der Gruppe bestehend aus $\gamma$-Cyclodextrinen, Zeolithen, Aktivkohlen, Cellulosederivaten, porösen Keramiken und einer beliebigen Kombination davon, innerhalb des abgelagerten Brennstoffs.

6. Verfahren nach einem der Ansprüche 1 bis 3, wobei die Behandlung verwendet wird, um einen abgelagerten Brennstoff in Form von Abfallballen herzustellen, die Perkolat im gelierten Zustand umfassen.

7. Verfahren nach einem der Ansprüche 1 bis 3, wobei das Polymer des superabsorbierenden polyelektrolytischen makromolekularen Hydrogel-Typs unterhalb der Abfallschicht einer Deponie angeordnet wird, um in situ das Perkolat der Deponie zu absorbieren.

8. Verfahren nach einem der Ansprüche 1 bis 3, wobei die Behandlung an Gerberschlamm durchgeführt wird.

9. Verfahren nach einem der Ansprüche 1 bis 3, ferner umfassend den Schritt des Verbrennens des gelierten Perkolats, um Synthesegas für die Erzeugung von Energie zu erzeugen.

10. Verfahren nach einem der Ansprüche 1 bis 3, wobei die Behandlung aus einer Leckage von Perkolat aus einer Lagereinrichtung oder einem Rohrsystem durchgeführt wird.

11. Produkt zur Behandlung von Perkolat aus Abfällen, umfassend ein Polymer des superabsorbierenden polyelektrolytischen makromolekularen Hydrogel-Typss in trockenem Zustand, das zum Absorbieren und Zurückhalten von Perkolat aus Abfall geeignet ist, und eine zweite Komponente, die geeignet ist, die vom Abfall erzeugte Gas-Phase zu absorbieren, **dadurch gekennzeichnet, dass** die besagte zweite Komponente ausgewählt ist aus der Gruppe bestehend aus $\alpha$-Cyclodextrinen, $\beta$-Cyclodextrinen, wobei die Menge an $\alpha$-Cyclodextrinen oder $\beta$-Cyclodextrinen zwischen 0 und 20 Gew.-% variabel ist, mit Bezug auf das Gewicht des Superabsorbers.

12. Produkt nach Anspruch 11, wobei das Polymer des superabsorbierenden polyelektrolytischen makromolekularen Hydrogel-Typs aus der Gruppe ausgewählt ist, die aus Superabsorbern auf Basis von Polyacrylamid, Acrylsäure, Polyethylenglykol, Polyvinylalkohol, Natriumpolyacrylat; Cellulosederivate; Stärke, besteht.

13. Produkt nach Anspruch 1 oder 2, wobei das Polymer des superabsorbierenden polyelektrolytischen makromolekularen Hydrogel-Typs ein Superabsorber ist, basierend auf Polyacrylamid, vernetzt mit Methyl-en-bis-acrylamid.

**Revendications**

1. Procédé de traitement de percolat à partir de déchets, ledit procédé comprenant l'étape consistant à ajouter auxdits déchets un polymère d'hydrogel du type superabsorbant polyélectrolytique macromoléculaire à l'état sec pour absorber et retenir le percolat des déchets pour la gélification du percolat, dans lequel le polymère d'hydrogel du type superabsorbant polyélectrolytique makromoléculaire est associé à un second composant approprié pour absorber la phase gazeuse produite par les déchets, **caractérisé en ce que** ledit second composant est choisi dans le groupe constitué par des α-cyclodextrines, des β-cyclodextrines , et la quantité des α-cyclodextrines ou de β-cyclodextrines est variable entre 0 et 20% en poids par rapport au poids du polymère superabsorbant.

2. Procédé selon la revendication 1, dans lequel le polymère du type hydrogel macromoléculaire polyélectrolytique superabsorbant est choisi dans le groupe constitué par des superabsorbants à base de polyacrylamide, d'acide acrylique, de polyéthylène glycol, d'alcool polyvinylique, de polyacrylate de sodium; des dérivés de la cellulose; d'amidon.

3. Procédé selon la revendication 2, dans lequel le polymère de l'hydrogel de type macromoléculaire polyélectrolytique superabsorbant est un superabsorbant à base de polyacrylamide réticulé avec de la méthylène-bisacrylamide.

4. Procédé selon l'une quelconque des revendications 1 à 3, dans lequel le traitement est effectué sur des déchets solides municipaux dans une décharge.

5. Procédé selon l'une quelconque des revendications 1 à 3, dans lequel le traitement est effectué sur un Refuse Derived Fuel, sous forme de balles de déchets, par injection d'air comprimé du polymère de l'hydrogel de type macromoléculaire polyélectrolytique superabsorbant à l'état sec, éventuellement en association avec un composant apte à absorber la phase gazeuse produite par les déchets, ledit composant étant choisi dans le groupe constitué par des γ-cyclodextrines, des zéolithes, des charbons actifs, des dérivés de cellulose, des céramiques poreuses et de toute combinaison de ceux-ci, dans le Refuse Derived Fuel.

6. Procédé selon l'une quelconque des revendications 1 à 3, dans lequel le traitement est utilisé pour produire du Refuse Derived Fuel sous la forme de balles de déchets comprenant du percolat à l'état gélifié.

7. Procédé selon l'une quelconque des revendications 1 à 3, dans lequel le polymère de l'hydrogel du type macromoléculaire polyélectrolytique superabsorbant est placé en dessous de la couche de déchet d'une décharge, de manière à absorber in situ le percolat de la décharge.

8. Procédé selon l'une quelconque des revendications 1 à 3, dans lequel le traitement est effectué sur des boues de tannerie.

9. Procédé selon l'une quelconque des revendications 1 à 3, comprenant en outre l'étape consistant à brûler le percolat gélifié pour produire un gaz de synthèse pour la production d'énergie.

10. Procédé selon l'une quelconque des revendications 1 à 3, dans lequel le traitement est effectué sur une fuite de percolat provenant d'une installation de stockage ou d'un système de tuyauterie.

11. Produit pour le traitement du percolat à partir de déchets, comprenant un polymère du hydrogel de type macromoléculaire polyélectrolytique superabsorbant à l'état sec, approprié pour absorber et retenir le percolat des déchets, et un second composant qui est approprié pour absorber la phase gazeuse produite par le déchets, **caractérisé en ce que** ledit second composant est choisi dans le groupe constitué par des α-cyclodextrines, des β-cyclodextrines, la quantité des α-cyclodextrines ou des β-cyclodextrines étant variable entre 0 et 20% en poids par rapport au poids du superabsorbant polymère.

12. Produit selon la revendication 11 , dans lequel le polymère du type hydrogel macromoléculaire polyélectrolytique superabsorbant est choisi dans le groupe constitué de superabsorbants à base de polyacrylamide, d'acide acrylique, de polyéthylèneglycol, d'alcool polyvinylique, de polyacrylate de sodium; des dérivés de la cellulose; d'amidon.

13. Produit selon la revendication 12, dans lequel le polymère de l'hydrogel de type macromoléculaire polyélectrolytique superabsorbant est un superabsorbant à base de polyacrylamide réticulé avec du méthylène-bis-acrylamide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0839539 A1
- WO 2006070337 A
- WO 2009022358 A